# EUROPÄISCHE PATENTANMELDUNG

(11) **EP 1 848 081 A1**
(43) Veröffentlichungstag der Anmeldung: **24.10.2007**
(21) Anmeldenummer: 07006628.7
(22) Anmeldetag: 30.03.2007
(51) Int. Cl.: H02G 3/12

(54) **Installationseinheit**

(30) Priorität: 21.04.2006 DE 10619185
(71) Anmelder: REHAU AG + Co, 95111 Rehau (DE)
(72) Erfinder: Schork, Rainer, 91330 Bammersdorf (DE); Mordhorst, Johannes, 24232 Schönkirchen (DE); Schinzel, Hartmut, 95213 Münchberg (DE); Weerts, Carsten, 31515 Wunstorf (DE)

(57) **Zusammenfassung**

Die Erfindung betrifft eine Installationseinheit für Kabelkanäle, umfassend ein gegenüber einem Kabelkanal festlegbares Unterteil, ein mit dem Unterteil lösbar verbindbares Oberteil, wobei das Oberteil als vorverdrahtete elektrische Baugruppe ausgebildet ist. Um eine derartige Installationseinheit dahingehend zu verbessern, dass das die Installationseinheit montagefreundlicher und kompakter aufbaubar ist, ist erfindungsgemäß vorgesehen, dass das Unterteil als Zwischengehäuse mit einem Boden und einer sich vom Boden erstreckenden Wand ausgebildet ist und eine Aufnahme für das Oberteil definiert, wobei, wenn das Oberteil in der Aufnahme aufgenommen ist, zwischen dem Unterteil und dem Oberteil ein Kabelanschlussraum ausgebildet ist.

## Beschreibung

Die Erfindung betrifft eine Installationseinheit für Kabelkanäle, umfassend: ein gegenüber einem Kabelkanal festlegbares Unterteil, ein mit dem Unterteil lösbar verbindbares Oberteil, wobei das Oberteil als vorverdrahtete elektrische Baugruppe ausgebildet ist.

Eine derartige Installationseinheit ist aus der DE 94 09 882 U1 bekannt. Diese Installationseinheit umfasst als Oberteil ein Installationsgerät mit einem Gehäuse und angeformten Rastelementen, um einen U-förmigen Aufrasthalter am Kanalboden halternd zu hintergreifen. Als Unterteil ist eine mit dem Aufrasthalter des Kanalbodens verrastbare Grundplatte vorgesehen, welche Einrastöffnungen aufweist, durch welche die am Installationsgerät angeformten Rastelemente hindurchragen. Das elektrische Installationsgerät umfasst einen Körper mit zwei Steckdosentöpfen. An den Steckdosentöpfen sind Gehäuse für Kabelanschlussräume seitlich angeformt, welche mit Deckeln verschließbar sind.

Die herkömmliche Installationseinheit hat den Nachteil, dass das Anschließen der vorverdrahteten elektrischen Baugruppe umständlich ist. Die hinführenden und wegführenden Leitungen dieser Installationseinheit können erst nach der Festlegung der Installationseinheit im Kabelkanal angeschlossen werden. So müssen die Anschlussarbeiten unter eingeschränkten Platzverhältnissen vorgenommen werden, was die Montage erschwert. Auch weist die Installationseinheit eine beträchtliche Größe auf, wobei der Mindestabstand zwischen zwei vorverdrahteten Steckdosen aufgrund der Größe der Kabelanschlussräume ca. 10 cm beträgt.

Der Erfindung liegt die Aufgabe zugrunde, die herkömmliche Installationseinheit dahingehend zu verbessern, dass die Installationseinheit kostengünstiger und wirtschaftlicher herstellbar, sowie montagefreundlicher ist und kompakter aufgebaut werden kann.

Erfindungsgemäß wird dies durch die kennzeichnenden Merkmale des Anspruches 1 gelöst.

Es ist erfindungsgemäß vorgesehen, dass das Unterteil als Zwischengehäuse mit einem Boden und einer sich vom Boden erstreckenden Wand ausgebildet ist und eine Aufnahme für das Oberteil definiert, wobei, wenn das Oberteil in der Aufnahme aufgenommen ist, zwischen dem Unterteil und dem Oberteil ein Kabelanschlussraum ausgebildet ist.
Durch die erfindungsgemäße Lösung gestaltet sich dass Anschließen der Installationseinheit an eine in dem Kabelkanal geführte Leitung wesentlich einfacher. Gewöhnlich werden das Oberteil und das Unterteil im verbundenen Zustand geliefert. Mit dem Herausnehmen des Oberteils aus der Aufnahme des Unterteils sind Kabelanschlüsse an der Unterseite des Oberteils direkt zugänglich. Verschlussdeckel zum Verschließen der Kabelanschlussräume wie im Stand der Technik sind nicht mehr erforderlich, denn der Kabelanschlussraum wird nun durch das Oberteil verdeckt. Die im Stand der Technik seitlich angeordneten Kabelanschlussräume sind bei der erfindungsgemäßen Lösung zusammengelegt und in den Zwischenraum zwischen dem Oberteil und dem Unterteil verlegt worden.
Dabei ist die erfindungsgemäße Installationseinheit wesentlich kompakter als die herkömmliche Installationseinheit. Benachbarte Installationseinheiten können nunmehr abstandslos, d. h. auf Stoß, nebeneinander angeordnet werden, weil die seitlichen Gehäuse für die Kabelanschlussräume entfallen.

Vorteilhafte Weiterbildungen der Erfindung werden in den Unteransprüchen beansprucht.

In einer bevorzugten Ausführungsform der Erfindung ist die vorverdrahtete elektrische Baugruppe als Mehrfachsteckdose ausgebildet. Bei einer Mehrfachsteckdose wird der Montageaufwand im Vergleich zur Einfachsteckdose umso geringer, je mehr Steckplätze vorhanden sind.

In einer weiteren bevorzugten Ausführungsform der Erfindung weist das Unterteil mindestens einen Eingriffsabschnitt auf, der bewegbar ist, um einen Eingriff mit dem Kabelkanal herzustellen bzw. zu lösen. Während bei einer reinen Rastverbindung, die zuverlässig halten soll, erhebliche Kräfte aufgebracht werden müssen, um den Eingriff herzustellen und wieder zu lösen, ist bei dieser vorteilhaften Ausführungsform lediglich der bewegbare Eingriffsabschnitt zu bewegen. Die Montagefreundlichkeit der Installationseinheit wird somit weiter verbessert.

In einer weiteren bevorzugten Ausführungsform der Erfindung ist das Oberteil beim Verbinden des Oberteils mit dem Unterteil im Unterteil führbar. Durch die Führung der Einsetzbewegung des Oberteils in das Unterteil kann das Oberteil positionsgenau gegenüber dem Unterteil ausgerichtet werden. Die Montagefreundlichkeit der Installationseinheit wird somit noch weiter verbessert.

In einer weiteren bevorzugten Ausführungsform der Erfindung weist das Oberteil zumindest einen Führungsvorsprung und das Unterteil zumindest einen Führungsschlitz auf.

In einer besonders bevorzugten Ausführungsform der Erfindung, ist, wenn das Oberteil in der Aufnahme des Unterteils angeordnet ist, der Kabelanschlussraum über den Führungsschlitz zugänglich.
Der Führungsschlitz ist mit einer Doppelfunktion belegt: Einerseits wird darin der Führungsvorsprung des Oberteils geführt um das Oberteil genau gegenüber dem Unterteil auszurichten, andererseits werden die hin- und wegführenden Leitungen der Installationseinheit durch die Führungsschlitze in den bzw. aus dem Kabelanschlussraum geführt. Die Führungsschlitze sind nach oben geöffnet, um die Führungsvorsprünge aufzunehmen, so dass vorteilhafterweise auch die Leitungen von oben in die Führungsschlitze eingelegt werden können. Die Einlässe der Führungsschlitze werden dann aber durch die Führungsvorsprünge versperrt, wenn das Oberteil und das Unterteil verbunden sind, so dass die Leitungen nicht durch den Einlass aus den Führungsschlitzen zu entnehmen sind.
Eine Einfädelung der Leitung in eine kreisrunde Öffnung zur Einleitung in den Kabelanschlussraum, wie aus dem Stand der Technik bekannt, entfällt vorteilhafterweise.

In einer weiteren, besonders bevorzugten Ausführungsform der Erfindung, deckt, wenn das Oberteil in der Aufnahme des Unterteils angeordnet ist, ein Abdeckabschnitt den Führungsschlitz zumindest abschnittsweise ab, um, vorzugsweise beim Transport oder der Lagerung der Installationseinheit, ein Eindringen von Schmutz und/oder Feuchtigkeit in den Kabelanschlussraum zu verhindern. So werden die empfindlichen Anschlussvorrichtungen, die vom Kabelanschlussraum aus zugänglich sind, besser vor Verschmutzung geschützt.

In einer weiteren bevorzugten Ausführungsform der Erfindung ist der Abdeckabschnitt fest mit dem Oberteil, über eine Sollbruchstelle abtrennbar, verbunden. So wird verhindert, dass der Abdeckabschnitt während des Transports oder der Lagerung der Installationseinheit ungewollt verloren gehen kann.

In einer weiteren bevorzugten Ausführungsform der Erfindung ist der Abdeckabschnitt einstückig mit dem Oberteil ausgebildet. Diese Maßnahme verringert die Anzahl der Bauteile, wobei ein mit angeformtem Abdeckabschnitt ausgebildetes Oberteil beispielsweise im Spritzgussverfahren einfach und kostengünstig herstellbar ist.

In einer weiteren bevorzugten Ausführungsform der Erfindung sind das Oberteil und das Unterteil miteinander verrastbar. Die Rastverbindung kann - im Gegensatz z.B. zu einer Schraubverbindung - bei der Montage leicht bewerkstelligt werden, ohne dass es eines gesonderten Werkzeugs bedarf. Dadurch wird die Montagefreundlichkeit der Installationseinheit weiter verbessert.

In einer weiteren bevorzugten Ausführungsform der Erfindung weist das Oberteil zumindest eine Rastnase und das Unterteil zumindest eine Rastnut auf. Ein derartiger Rastmechanismus ist einfach und kostengünstig herstellbar.

In einer weiteren bevorzugten Ausführungsform der Erfindung weist das Oberteil einen im Wesentlichen blockförmigen Körper mit einer Breite von ca. 40 mm auf. Somit ist das Oberteil bei Kabelkanälen mit unterschiedlich breiten Deckelöffnungen, insbesondere mit Deckelöffnungen von 45 mm oder 80 mm Breite, verwendbar.

In einer weiteren bevorzugten Ausführungsform der Erfindung weist das Unterteil einen im Wesentlichen blockförmigen Körper mit einer Breite von ca. 50 mm auf. In einem derart ausgebildeten Unterteil ist das Oberteil mit 40 mm Breite besonders kompakt anordnungsbar.

Eine besonders bevorzugte Ausführungsform der Erfindung betrifft eine Leitungsbefestigungsvorrichtung, vorzugsweise für eine Installationseinheit nach einem der vorangegangenen Ausführungsformen, umfassend: zwei Anlageabschnitte, welche mit einem Leitungsendstück in Anlage bringbar sind, wobei die Leitungsbefestigungsvorrichtung zwischen einer ersten Stellung, in welcher das Leitungsendstück einlegbar ist, und einer zweiten Stellung, in welcher das Leitungsendstück festgelegt ist, überführbar ist, wobei der erste Anlageabschnitt gegenüber dem zweiten Anlageabschnitt um eine Schwenkachse verschwenkbar ist.

Somit kann ein Leitungsendstück gegenüber einem Körper, vorzugsweise dem Körper des Oberteils der Installationseinheit, festgelegt werden, ohne dass es sich bei einer Zugbelastung aus der am Körper vorgesehenen Anschlussvorrichtung lösen kann, was zu einer Unterbrechung der Stromversorgung führen würde.

In einer weiteren bevorzugten Ausführungsform der Erfindung weist die Leitungsbefestigungsvorrichtung eine Rastvorrichtung auf, womit der schwenkbare Anlageabschnitt in zumindest einer Schwenkstellung verrastbar ist. Erfahrungsgemäß bereitet es Schwierigkeiten, das Leitungsendstück zunächst einzufangen, in Position zu halten und anschließend dauerhaft zu festzulegen. Durch die Verschwenkung des ersten Anlageabschnitts wird das Leitungsendstück eingefangen und durch die Verrastung in Position gehalten, so dass es aus dieser Position leicht dauerhaft festlegbar ist. Dabei wird die Montagefreundlichkeit der Leitungsbefestigungsvorrichtung verbessert.

In einer weiteren bevorzugten Ausführungsform der Erfindung ist zumindest einer der Anlageabschnitte entlang der Schwenkachse bewegbar bzw. verstellbar. Durch die Bewegbarkeit bzw. Verstellbarkeit eines der Anlageabschnitte ist das Leitungsendstück aus der eingefangenen Position leicht festlegbar.

In einer weiteren bevorzugten Ausführungsform der Erfindung ist der schwenkbare Anlageabschnitt entlang der Schwenkachse bewegbar.

In einer weiteren bevorzugten Ausführungsform der Erfindung verläuft die Schwenkachse im Wesentlichen senkrecht zu einer Ebene, welche eine Achse einer zu befestigenden Leitung einschließt.

Eine besonders bevorzugte Ausführungsform der Erfindung betrifft eine Installationseinheit nach einer der obigen Ausführungsformen mit zumindest einer Leitungsbefestigungsvorrichtung nach einer der obigen Ausführungsformen.

### Kurze Beschreibung der Figuren

- Fig. 1: zeigt eine Explosionsdarstellung der erfindungsgemäßen Installationseinheit mit einem Abschnitt eines Kabelkanals.
- Fig. 2: zeigt eine perspektivische Ansicht, von schräg unten, des als Zwischengehäuse ausgebildeten Unterteils der erfindungsgemäßen Installationseinheit.
- Fig. 3: zeigt eine perspektivische Ansicht, von schräg unten, des als vorverdrahtete elektrische Baugruppe ausgebildeten Oberteils der erfindungsgemäßen Installationseinheit.

### Detaillierte Beschreibung der bevorzugten Ausführungsbeispiele

In der nachfolgenden Beschreibung werden positionsangebende Begriffe wie "oben", "unten", "links", "rechts", etc., verwendet, die dem besseren Verständnis der Erfindungsbeschreibung dienen und sich auf die jeweils dargestellte Ansicht beziehen. Darüber hinaus wird diesen Begriffen kein beschränkender Charakter beibemessen.

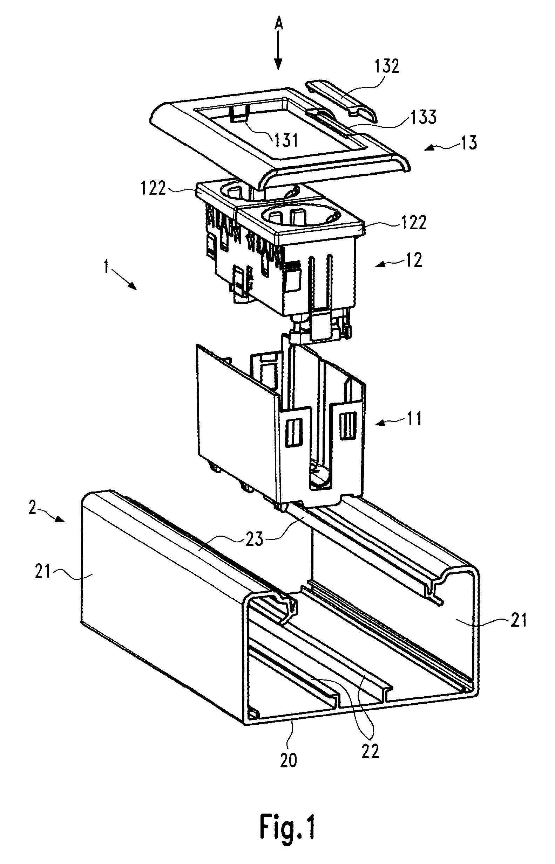

Fig. 1 zeigt eine Explosionsdarstellung der erfindungsgemäßen Installationseinheit 1, umfassend ein als Zwischengehäuse ausgebildetes Unterteil 11, ein als vorverdrahtete, elektrische Baugruppe ausgebildetes Oberteil 12 und einen als Abdeck- oder Halterahmen ausgebildeten Deckel 13.

Der Kabelkanal 2 ist ein handelsüblicher, normierter bspw. Brüstungskanal aus PVC, Aluminium, Stahl oder dergleichen, mit einem im Querschnitt im Wesentlichen C-förmigen Profil und einer 80 mm oder 45 mm breiten Deckelöffnung. Vom Boden 20 des Kabelkanals 2 erstrecken sich beidseitig L-förmige Schenkel 21, wobei sich die freien Enden der Schenkel 21 gegenüberliegen und eine Kanalmündung bzw. die Deckelöffnung definieren. An den freiliegenden, den Mündungsbereich flankierenden Enden der Schenkel 21 sind Führungsnuten 23 ausgebildet, die parallel mit definiertem Abstand zueinander verlaufen, in welche Befestigungsabschnitte 131 des Deckels 13 einsetzbar sind, um die Installationseinheit 1 deckelseitig zu fixieren.
In etwa in der Mitte des Kabelkanals 2 stehen vom Kanalboden 20 zwei im Querschnitt im Wesentlichen L-förmige bzw. hakenförmige Eingriffsabschnitte 22 hervor, die im Wesentlichen parallel mit definiertem Abstand Rücken-an-Rücken zueinander angeordnet sind. Die hakenförmigen Eingriffsabschnitte 22 bilden eine Führungseinrichtung zur Führung eines Führungsabschnitts 118 des Unterteils 11 in einer zwischen den Eingriffsabschnitten 22 ausgebildeten Führungsnut.

In den Ecken des Kabelkanals 2 sind in Längsrichtung verlaufende Stege angeformt, die im Zusammenspiel mit der jeweils benachbarten Wand Aufnahmen für etwaige Verbindungsmittel zum Verbinden benachbarter Abschnitte hier nicht dargestellter Kabelkanäle 2 definieren.

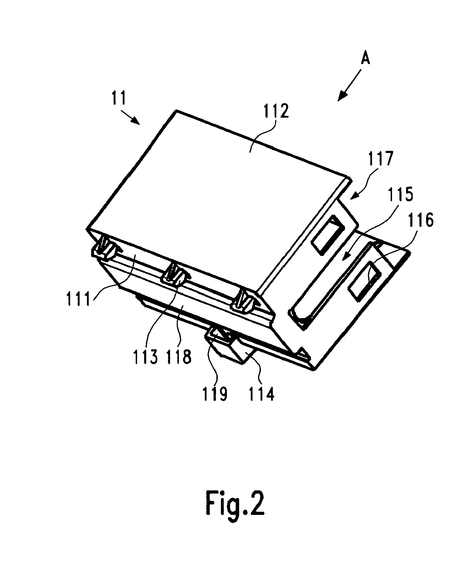

Fig. 2 zeigt eine perspektivische Ansicht, von schräg unten, des als Zwischengehäuse ausgebildeten Unterteils 11 der erfindungsgemäßen Installationseinheit 1. Das Unterteil 11 umfasst einen Boden 111, eine sich vom Boden 111 erstreckende, umlaufende Wand 112 und definiert eine Aufnahme 117 zur Aufnahme des Oberteils 12.
Am Boden 111 des Unterteils 11 ist ein in Längsrichtung des Unterteils 11 verlaufender Führungssteg 118 angeformt, der den Führungsabschnitt 118 des Unterteils 11 bildet, welcher in die zwischen den Eingriffsanschnitten 22 des Kabelkanals 2 gebildeten Führungsnut einsetzbar und darin führbar ist.
Weiterhin sind am Boden 111 des Unterteils 11 im Wesentlichen L-förmige bzw. hakenförmige Eingriffsabschnitte 113 angeformt, die im Wesentlichen gleichmäßig über die Länge des Unterteils 11 verteilt sind, wobei jeweils der Hakenabschnitt eines Eingriffsabschnitts 113 dem Führungssteg 118 zugewandt und der Rücken davon vom Führungssteg 118 abgewandt ist. Die Eingriffsabschnitte 113 sind derart ausgebildet, dass sie mit den im Querschnitt ebenfalls hakenförmigen Eingriffsabschnitten 22 am Kanalboden 20 des Kabelkanals 2 in Eingriff gebracht werden können. Auf der anderen Seite des Führungsstegs 118 ist am Unterteil 11 ein Gehäuse 114 angeordnet, in dem ein Eingriffsabschnitt 119 aufgenommen ist, der bewegbar ist, um einen Eingriff mit einem der hakenförmigen Eingriffsabschnitte 22 des Kabelkanals 2 herzustellen bzw. zu lösen. Vorzugsweise ist der bewegbare Eingriffsabschnitt 119 als radialer Vorsprung am Ende eines Bolzens ausgebildet, wobei der Bolzen mit einem Schraubenzieher drehbetätigt wird, um den Eingriff mit einem der Eingriffsabschnitte 22 am Kanalboden 20 des Kabelkanals 2 herzustellen bzw. zu lösen.

Die Seitenwände an den Längsenden des Unterteils 11 sind im Wesentlichen spiegelsymmetrisch ausgebildet und umfassen je einen sich vom oben liegenden Rand in einer Aufsteckrichtung A näherungsweise bis zum Boden 111 erstreckenden Führungsschlitz 115. Neben dem in etwa mittig in der Seitenwand des Unterteils 11 ausgebildeten Führungsschlitz 115 sind beidseitig davon fensterförmige Öffnungen 116 ausgebildet, die als Rastabschnitte 116 bzw. Rastnuten 116 zur Verrastung der am Oberteil 12 ausgebildeten Rastabschnitte bzw. Rastnasen 126 dienen.

Das gesamte Unterteil 11, mit Ausnahme des bewegbaren Rastabschnitts 119, ist vorzugsweise als einzelnes, im Spritzgussverfahren hergestelltes Kunststoffgehäuse einteilig ausgebildet.

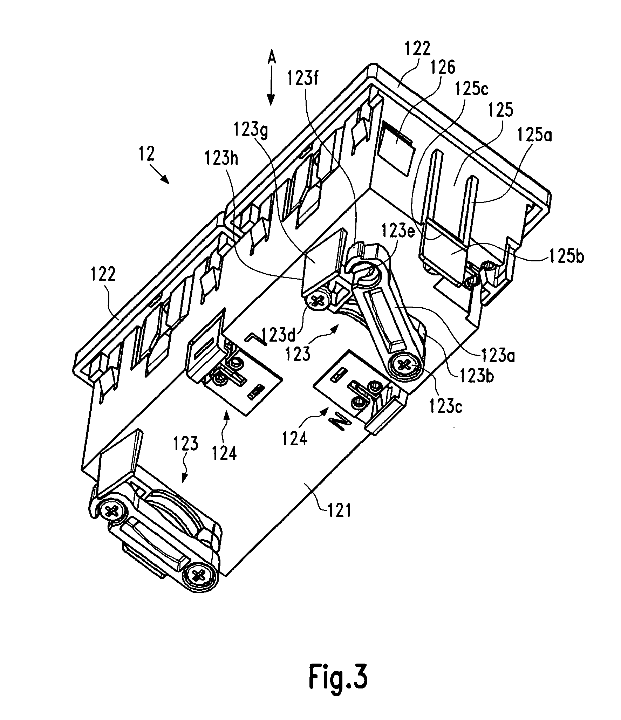

Fig. 3 zeigt eine perspektivische Ansicht, von schräg unten, des Oberteils 12 der erfindungsgemäßen Installationseinheit 1. Das Oberteil 12 ist als vorverdrahtete elektrische Baugruppe, insbesondere als Mehrfachsteckdose mit zwei Steckplätzen 122 ausgebildet. Die vorverdrahtete elektrische Baugruppe kann beispielsweise aber auch als Mehrfachsteckdose mit mehr als zwei Steckplätzen oder als Anschlußdose für bspw. Telefon, Computer und dergleichen ausgebildet sein.
Das Oberteil 12 umfasst einen im Wesentlichen blockförmigen Körper mit einer Höhe und Breite von ca. 40 mm und einer Länge von ca. 100 mm. Die Frontdeckel der Steckdosen 122 sind in der Vorderansicht jeweils im Wesentlichen quadratisch (Fig. 1) und weisen eine Kantenlänge von jeweils 50 mm auf, d.h. sie stehen über den blockförmigen Körper des Oberteils 12 sowie des Unterteils 11 in Richtung der Breite leicht über.
An der Unterseite 121 des Oberteils 12 sind zwei Anschlusseinrichtungen 124 zum Anschluss jeweils einer Stromleitung ausgebildet. Die Steckdosen 122 sind im Inneren des abgebildeten, blockförmigen Gehäuses untereinander verdrahtet. An den Längsendseiten des Oberteils 12 sind jeweils in etwa mittig der Seitenwand Führungsvorsprünge 125 ausgebildet, die zur Aufnahme in den Führungsschlitzen 115 des Unterteils 11 geeignet und vorgesehen sind.
Im vorliegenden Beispiel umfasst jeder Führungsvorsprung 125 zwei in Aufsteckrichtung A verlaufende Stege 125a, die an der Seitenwand des Gehäuses des Oberteils 12 angeformt sind. In Verlängerung der Stege 125a jedes Führungsvorsprungs 125 ist ein über die Unterseite 121 des Oberteils hervorstehender Abdeckabschnitt 125b angeformt, der über eine Sollbruchstelle 125c abtrennbar ist.
In einem Vormontagezustand der Installationseinheit 1, beispielsweise zum Transport oder zur Lagerung, ist das Oberteil 12 in der Aufnahme 117 des Unterteils 11 angeordnet. Der verlierbare Abdeckabschnitt 125b dient dazu, einen Abschnitt jedes Führungsschlitzes 115 zwischen der Unterseite 121 des Oberteils 12 und dem Boden des Unterteils 11 im Vormontagezustand verschlossen zu halten, um ein Eindringen von Schmutz und Feuchtigkeit in einen Kabelanschlussraum, der sich bei eingesetztem Oberteil 12 zwischen der Unterseite 121 des Oberteils 12 und dem Boden 111 des Unterteils 11 ausbildet, zu verhindern. Bei der Installation der Installationseinheit 1 wird jeder verlierbare Abdeckabschnitt 125b an der Sollbruchstelle 125c vom Oberteil 12 abgebrochen, so dass der Kabelanschlussraum über die Führungsschlitze 115 zugänglich ist.

An der Unterseite 121 des Oberteils 12 sind zwei Leitungsbefestigungsvorrichtungen 123 vorgesehen, die einen eigenständigen Aspekt der Erfindung betreffen und die nachstehend beschrieben werden.
Die Leitungsbefestigungsvorrichtungen 123 können in verschiedenen Anwendungen zum Einsatz kommen können, in welchen zumindest eine Leitung, insbesondere ein Stromkabel, gegenüber einem Körper festgelegt werden soll. Die Leitungsbefestigungsvorrichtungen 123 werden nachstehend auch als Zugentlastungen bezeichnet, da sie die Funktion erfüllen, die an das Oberteil 12 hinführenden und die vom Oberteil 12 wegführenden Leitungen bei einer Zugbelastung gegenüber Herausziehen aus der jeweils zugeordneten Anschlusseinheit 124 zu sichern. Jeder Anschlusseinheit 124 ist wenigstens eine als Zugentlastung ausgebildete Leitungsbefestigungsvorrichtung123 zugeordnet.

Die Leitungsbefestigungsvorrichtung 123 umfasst einen ersten Anlageabschnitt 123a und einen zweiten Anlageabschnitt 123b, wobei die ersten und zweiten Anlageabschnitte 123a, 123b über zwei Schrauben 123c bzw. 123d verbindbar sind. Die zwei Schrauben 123c bzw. 123d bilden erste und zweite Verbindungsmittel im Sinne der Erfindung.
Beide Anlageabschnitte 123a und 123b weisen im Wesentlichen dieselbe bügelförmige Gestalt mit einseitiger, mittiger, bogenförmiger Einkerbung auf. Wenn sich die Anlageabschnitte 123a und 123b gegenüberliegen, bilden die bogenförmigen Einkerbungen eine näherungsweise kreisförmige Leitungsaufnahme.

Eine Schraube 123c erstreckt sich durch eine Öffnung an einem Ende des ersten Anlageabschnitts 123a und ist in einer Schrauböffnung an einem Ende des zweiten Anlageabschnitt 123b verschraubt. Die Schraubachse der Schraube 123c definiert eine Schwenkachse, über welche der erste Anlageabschnitt 123a gegenüber dem zweiten Anlageabschnitt 123b verschwenkbar ist. Die Schwenkachse verläuft dabei im Wesentlichen senkrecht zu einer Ebene, welche eine Achse einer in der Leitungsaufnahme aufzunehmenden Leitung einschließt. An dem von der Schwenkachse radial entfernten Ende des ersten Anlageabschnitts 123a ist radial außenseitig eine Rastnase 123f ausgebildet, die an einem flexiblen Rastvorsprung 123g verrastbar ist. Dabei kann der erste Anlageabschnitt 123a in zumindest einer Schwenkstellung verrastet werden.

Die Leitungsbefestigungsvorrichtung 123 ist zwischen einer ersten Stellung, in welcher ein Leitungsendstück (nicht dargestellt) einlegbar ist und einer zweiten Stellung, in welcher das Leitungsendstück festgelegt ist, überführbar. In der ersten Stellung bilden die Anlageabschnitte 123a und 123b über die Schwenkachse vorzugsweise einen Winkel von mehr als 90°, damit das Leitungsendstück ungehindert einlegbar ist. In der zweiten Stellung liegen die Anlageabschnitte 123a, 123b im wesentlichen übereinander, wobei die bogenförmigen Einkerbungen zueinander im Wesentlichen spiegelsymmetrisch angeordnet sind, und wobei die Anlageabschnitte 123a und 123b über die Schwenkachse einen Winkel von 0° bilden.

Zum Überführen von der ersten in die zweite Stellung ist der erste Anlageabschnitt 123a in einer Richtung verschwenkbar, die als Schließrichtung bezeichnet wird. Zum Überführen von der zweiten in die erste Stellung ist der erste Anlageabschnitt 123a in einer der Schließrichtung entgegengesetzten Öffnungsrichtung verschwenkbar.

Die Rastnase 123f des ersten Anlageabschnitts 123a weist auf der in Schließrichtung vorne liegenden Seite einen geringeren Radius auf als an der in Schließrichtung hinten liegenden Seite, so dass sie an der radial außenliegenden Seite eine Keilfläche bildet.

Der flexible, blattförmige Rastvorsprung 123g ist in etwa tangential zu einem gedachten Kreis um die Schwenkachse angeordnet und um eine tangential zu dem gedachten Kreis verlaufende Biegeachse biegbar.
Beim Verschwenken des ersten Anlageabschnitts 123a in Schließrichtung ist der blattförmige Rastvorsprung 123g bei Berührung mit der Keilfläche der Rastnase 123f auslenkbar und um die Biegeachse verbiegbar. An der radial innenliegenden Fläche des blattförmigen Rastvorsprungs 123g kann eine Vielzahl von Rastnuten vorgesehen sein, in welchen die Rastnase 123f einrastbar ist, um den ersten Anlageabschnitt 123a in verschiedenen Schwenkstellungen zu verrasten.

Am freien Ende des ersten Anlageabschnitts 123a ist eine schlitzförmige Aussparung 123e mit Zugang von der in Schwenkrichtung vorne liegenden Seite derart ausgebildet, dass der Schaft der zweiten Schraube 123d in einer entsprechenden Schwenkstellung des ersten Anlageabschnitts 123a in der Aussparung 123e aufnehmbar ist. In der Schwenkstellung, in der die Schraube 123d vollständig in der Aufnahme 123e des ersten Anlageabschnitts 123a aufgenommen ist, befindet sich die Rastnase 123f an der Rastkante 123h des flexiblen Rastzahns 123g in Anlage.

In einer derartigen Position ist der erste Anlageabschnitt 123a festgelegt, da die Schwenkbewegung einerseits durch die Schraube 123d und andererseits durch die Rastkante 123h unterbunden wird.
Um die verrastete Stellung des ersten Anlageabschnitts 123a aus dieser Position zu lösen, muss der flexible Rastvorsprung 123g verbogen werden, so dass die Rastnase 123f vorbeiführbar ist und der Anlageabschnitt 123a in seine Ausgangsstellung verschwenkbar ist.

Die im Rücken der bogenförmigen Einkerbung liegende Seite des verschwenkbaren Anlageabschnitts 123a bildet im Wesentlichen eine ebene Fläche. Mit dieser ebenen Anlagefläche ist der erste Anlageabschnitt 123b mit dem Boden 111 des Unterteils 11 in Anlage bringbar, um das Oberteil 12 gegenüber dem Unterteil 11 abzustützen und auf Abstand zu halten, und um im Zwischenraum zwischen der Unterseite 121 des Oberteils 12 und dem Boden 111 des Unterteils 11 den Kabelanschlussraum auszubilden. In dem Kabelanschlussraum werden die an den Anschlusseinrichtungen 124 anzuschließenden Leitungsendstücke angeordnet.

Wie in Fig. 1 zu sehen ist, umfasst die Installationseinheit 1 außerdem einen Deckel 13, der als Abdeck- oder Halterahmen ausgebildet ist und der ein Verbindungselement zwischen der 45 mm breiten Installationseinheit 1 und der 80 mm breiten Deckelöffnung des Kabelkanals 2 darstellt. Der Deckel 13 weist Rastabschnitte 131 auf, mit denen der Deckel 13 gegenüber dem Kabelkanal 2 festlegbar ist. Bei Installationseinheiten 1 mit deckelseitiger Befestigung in bspw. Stahlkanälen kann auch vollständig auf eine bodenseitige Befestigung verzichtet werden, wobei die Eingriffsabschnitte 22 eingespart werden können. Sonst kann die Installationseinheit 1 sowohl am Boden 20 als auch an der Mündung des Kabelkanals 2 festgelegt werden. Zur Kennzeichnung der jeweiligen Installationseinheit 1 ist am Deckel 13 eine in einer Aufnahme 133 aufnehmbare transparente Abdeckung 132 vorgesehen, unter welcher ein Etikett oder dergleichen einlegbar ist.

Die bevorzugte Anwendung der erfindungsgemäßen Installationseinheit 1 wird nachstehend mit Bezug auf die beiliegenden Zeichnungen beschrieben.

Um die erfindungsgemäße Installationseinheit 1 in einer bestimmten Position im Kabelkanal 2 festzulegen, wird das Unterteil 11 in Aufsteckrichtung A in den Kabelkanal 2 eingesetzt, so dass der Führungssteg 118 im Zwischenraum zwischen den Rücken der Eingriffsabschnitte 22 des Kabelkanals 2 angeordnet ist und die Eingriffsabschnitte 113 des Unterteils 11 mit einem der Eingriffsabschnitte 22 in Eingriff gelangen.
Dabei ist das Unterteil 11 in Längsrichtung des Kabelkanals 2 entlang der Eingriffsabschnitte 22 immer noch führbar.
Zur genauen Positionierung des Unterteils 11 im Kabelkanal 2 wird der bewegbare Eingriffsabschnitt 119 des Unterteils 11 bewegt und in Eingriff mit dem anderen der Eingriffabschnitte 22 des Kabelkanals 2 gebracht, so dass das Unterteil 11 gegenüber dem Kabelkanal 2 festgelegt ist. Vorzugsweise wird dabei der bewegbare Eingriffsabschnitt 119 derart bewegt und in Anlage mit einem der Eingriffsabschnitte 22 gebracht, dass der Eingriffsabschnitt 22 zwischen dem bewegbaren Eingriffsabschnitt 119 und dem Führungssteg 118 festgeklemmt wird.

Vor dem Anschließen der anzuschließenden Leitungsendstücke (nicht dargestellt) an die Anschlusseinrichtungen 124 des Oberteils 12 werden die verlierbaren Abschnitte 125b an Sollbruchstellen 125c vom Oberteil 12 abgebrochen, so dass die Leitungsaufnahmen der Leitungsbefestigungsvorrichtungen 123 zugänglich sind.

Um das als vorverdrahtete elektrische Baugruppe ausgebildete Oberteil 12 in einem elektrischen Stromkreis einzubinden, werden die Leitungsendstücke in die jeweiligen Leitungsbefestigungsvorrichtungen 123 eingesetzt und befestigt. Dieser Vorgang wird nachfolgend einmal für den Anschluss eines Leitungsendstücks beschrieben.

Wie oben beschrieben wurde, umfasst jede Leitungsbefestigungsvorrichtung 123 zwei Anlageabschnitte 123a, 123b, welchen mit einem Leitungsendstück in Anlage bringbar sind, wobei die Leitungsbefestigungsvorrichtung 123 zwischen einer ersten Stellung, in welcher das Leitungsendstück einlegbar ist, und einer zweiten Stellung, in welcher das Leitungsendstück festgelegt ist, überführbar ist.

In der ersten Stellung bzw. der Ausgangsstellung ist der erste Anlageabschnitt 123a derart angeordnet, dass das Leitungsende in die Leitungsaufnahme des zweiten Anlageabschnitts 123b einlegbar ist. Anschließend wird der erste Anlageabschnitt 123a um die Schwenkachse verschwenkt.

Beim Verschwenken des ersten Anlageabschnitts 123a wird der flexible Rastvorsprung 123g von der keilförmigen Fläche an der Rastnase 123f ausgelenkt und weggebogen. Die Rastnase 123f wird am Rastvorsprung 123g vorbeigeführt, bis die Rastnase 123f hinter dem Rastvorsprung 123g einrastet. In dieser Stellung befindet sich der Schaft der Schraube 123d in der Aufnahme 123e. Eine weiterführende Schwenkbewegung wird durch die Schraube 123d gestoppt. Eine entgegengesetzte Schwenkbewegung wird dadurch verhindert, dass eine Anschlagfläche der Rastnase 123f an der Rastkante 123h des Rastvorsprungs 123g anliegt.

In dieser verrasteten Schwenkstellung wird der erste Anlageabschnitt 123a durch Anziehen der Schrauben 123c und 123d entlang der Schwenkachse verstellt und auf den zweiten Anlageabschnitt 123b zugeführt, wobei das Leitungsendstück (nicht dargstellt) zwischen den beiden Anlageabschnitten 123a und 123b festgeklemmt wird. Die Schrauben 123c und 123d werden vollständig eingeschraubt, bis deren Schraubköpfe in den topfförmigen Schraubenkopfaufnahmen des ersten Anlageabschnitts 123a verschwinden und nicht mehr über die ebene Anlagefläche des ersten Anlageabschnitts 123a hervorstehen.

Die eben beschriebene Methode der Leitungsbefestigung wird für beide Leitungsendstücke gleichermaßen angewendet. So wird jedes Leitungsendstück auch bei einer einwirkenden Leitungsbefestigungsvorrichtung 123 in Position gehalten. Anschließend werden die Leitungsendstücke an den Anschlusseinrichtungen 124 des Oberteils 12 angeschlossen.

Wenn die Leitungsendstücke in den Anschlusseinrichtungen 124 angeschlossen sind, wird das Oberteil 12 in Aufsteckrichtung A auf das Unterteil 11 aufgesteckt.
Zunächst werden die an den Anschlusseinrichtungen 124 angeschlossenen Leitungen von oben in die Führungsschlitze 125 des Unterteils 11 eingelegt, bevor das Oberteil 12 gegenüber dem Unterteil 12 durch Eingabe der Führungsabschnitte 125 in die Führungsschlitze 115 ausgerichtet wird. Beim Einsetzen des Oberteils 12 in die Aufnahme 117 des Unterteils 11 werden die Führungsabschnitte 125 in den Führungsschlitzen 115 in Aufsteckrichtung A geführt, bis die ebenen Anlageflächen der Leitungsbefestigungsvorrichtungen 123 am Boden 111 des Unterteils 11 aufstehen. Der dadurch zwischen dem Oberteil 12 und dem Unterteil 11 ausgebildete Kabelanschlussraum ist über die am unteren Ende der Führungsschlitze 115 verbleibenden Öffnungen zugänglich.

Beim Einführen des Oberteils 12 in die Aufnahme 117 des Unterteils 11 werden die Seitenwände 112 des Unterteils 11 durch in Aufsteckrichtung A vorne liegende, keilförmige Flächen der Rastvorsprünge 126 des Oberteils 12 elastisch verbogen, bis die Rastvorsprünge 126 in den fensterförmigen Aussparungen 116 einrasten.
Eine Bewegung des Oberteils 12 aus dem Unterteil 11 entgegen der Aufsteckrichtung A wird durch die Verrastung der Rastvorsprünge 126 in den fensterförmigen Aussparungen 116 unterbunden. Um die Verrastung zu lösen, müssen die Seitenwände 112 des Unterteils 11 gegen das Oberteil 12 weggebogen werden.

Der Deckel 13 der erfindungsgemäßen Installationseinheit 1 wird nach dem Verrasten des Oberteils 12 mit dem Unterteil 11 aufgesteckt, wobei Befestigungsabschnitte 131 an der Unterseite des Deckels 13 mit den Führungsnuten 23 des Kabelkanals 2 in Eingriff gebracht werden, so dass die Installationseinheit 1 mit dem Kabelkanal 2 sowohl am Boden 20 des Kabelkanals 2 als auch am Mündungsbereich verbunden ist.

Bei der Montage der Installationseinheit 1 ist die oben beschriebene Montagereihenfolge nicht bindend. Beispielsweise können das Oberteil 12 (mit angeschlossenen Leitungen) und das Unterteil 11 vormontiert und danach gemeinsam im Kabelkanal 2 befestigt werden.

Die Installationseinheit 1 kann auch problemlos wieder aus dem Kabelkanal 2 entfernt werden.

Dazu ist der Deckel 13 der Installationseinheit 1 einfach abnehmbar. Um die Verrastung des Oberteils 12 mit dem Unterteils 11 zu lösen, wird eine Seitenwand 112 des Unterteils 11 weggebogen, bis der Rastvorsprung 126 des Oberteils 12 aus der fensterförmigen Öffnung 116 des Unterteils 11 gleiten kann. Anschließend wird das Oberteil 12 mit angeschlossenen Leitungsendstücken aus dem Unterteil 11 entnommen.

Die Verrastung des Unterteils 12 mit dem Kabelkanal 2 wird dadurch gelöst, dass der bewegliche Eingriffsabschnitt 119 bewegt wird, um den Eingriff mit dem Eingriffsabschnitt 22 am Boden 20 des Kabelkanals 2 zu lösen. Zum Abkoppeln der Installationseinheit 1 von den Leitungen werden die Leitungsbefestigungsvorrichtungen 123 durch Lösen der Schrauben 123c und 123d, Verbiegen des Rastvorsprungs 123g und Verschwenken des ersten Anlageabschnitts 123a in die erste Stellung überführt, und die Leistungsendstücke werden aus den Leitungsbefestigungsvorrichtungen 123 sowie den Anschlussvorrichtungen 124 entnommen.

Die erfindungsgemäße Installationseinheit 1 ist jederzeit wieder verwendbar.

In Brüstungs- bzw. Kabelkanälen 2 mit bspw. 45 mm breiter Deckelöffnung ist die Installationseinheit 1 vorteilhafterweise so einsetzbar, dass das Oberteil 12 mit bspw. einer Mehrfachsteckdose 122, jedoch ohne das Unterteil 11 und ohne den Deckel 13 in den, im freiliegenden Bereich der Mündung des Kabelkanals 2 flankierenden Enden der Schenkel 21 angeordneten Führungsnuten 23, befestigbar ist.

## Patentansprüche

1. Installationseinheit (1) für Kabelkanäle (2), umfassend: ein gegenüber einem Kabelkanal (2) festlegbares Unterteil (11), ein mit dem Unterteil (11) lösbar verbindbares Oberteil (12), **dadurch gekennzeichnet, dass** das Oberteil (12) als vorverdrahtete elektrische Baugruppe ausgebildet ist, wobei das Unterteil (11) als Zwischengehäuse mit einem Boden (111) und einer sich vom Boden (111) erstreckenden Wand ausgebildet ist und eine Aufnahme (117) für das Oberteil (12) definiert, wobei, wenn das Oberteil (12) in der Aufnahme (117) angeordnet ist, zwischen dem Unterteil (11) und dem Oberteil (12) ein Kabelanschlussraum ausgebildet ist.

2. Installationseinheit (1) nach Anspruch 1, **dadurch gekennzeichnet, dass** die vorverdrahtete elektrische Baugruppe (12) als Mehrfachsteckdose ausgebildet ist.

3. Installationseinheit (1) nach einem der vorangegangenen Ansprüche, **dadurch gekennzeichnet, dass** das Unterteil (11) mindestens einen Eingriffsabschnitt (119) aufweist, der bewegbar ist, um einen Eingriff mit dem Kabelkanal (2) herzustellen bzw. zu lösen.

4. Installationseinheit (1) nach einem der vorangegangenen Ansprüche, **dadurch gekennzeichnet, dass** das Oberteil (12) beim Verbinden des Oberteils (12) mit dem Unterteil (11) im Unterteil (12) führbar ist.

5. Installationseinheit (1) nach Anspruch 4, **dadurch gekennzeichnet, dass** das Oberteil (12) zumindest einen Führungsvorsprung (125) aufweist.

6. Installationseinheit (1) nach Anspruch 4 oder 5, **dadurch gekennzeichnet, dass** das Unterteil (11) zumindest einen Führungsschlitz (115) aufweist.

7. Installationseinheit (1) nach einem der Ansprüche 4 bis 6, **dadurch gekennzeichnet, dass**, wenn das Oberteil (12) in der Aufnahme (117) des Unterteils (11) angeordnet ist, der Kabelanschlussraum über den Führungsschlitz (115) zugänglich ist.

8. Installationseinheit (1) nach einem der Ansprüche 4 bis 6, **dadurch gekennzeichnet, dass**, wenn das Oberteil (12) in der Aufnahme (117) des Unterteils (11) angeordnet ist, ein Abdeckabschnitt (125b) den Führungsschlitz (125) zumindest abschnittsweise abdeckt, um, vorzugsweise beim Transport oder der Lagerung der Installationseinheit (1), ein Eindringen von Schmutz und/oder Feuchtigkeit in den Kabelanschlussraum zu verhindern.

9. Installationseinheit (1) nach Anspruch 8, **dadurch gekennzeichnet, dass** der Abdeckabschnitt (125b) fest mit dem Oberteil (12), über eine Sollbruchstelle (125c) abtrennbar, verbunden ist.

10. Installationseinheit (1) nach Anspruch 9, **dadurch gekennzeichnet, dass** der Abdeckabschnitt (125b) einstückig am Oberteil (12) angeordnet ist.

11. Installationseinheit (1) nach einem der vorangegangenen Ansprüche, **dadurch gekennzeichnet, dass** das Oberteil (12) und das Unterteil (11) miteinander verrastbar sind.

12. Installationseinheit (1) nach Anspruch 11, **dadurch gekennzeichnet, dass** das Oberteil (12) zumindest eine Rastnase (126) aufweist.

13. Installationseinheit (1) nach Anspruch 11 oder 12, **dadurch gekennzeichnet, dass** das Unterteil (11) zumindest eine Rastnut (116) aufweist.

14. Installationseinheit (1) nach einem der vorangegangenen Ansprüche, **dadurch gekennzeichnet, dass** das Oberteil (12) einen im Wesentlichen blockförmigen Körper mit einer Breite von etwa 40 mm aufweist.

15. Installationseinheit (1) nach einem der vorangegangenen Ansprüche, **dadurch gekennzeichnet, dass** das Unterteil (11) einen im Wesentlichen blockförmigen Körper mit einer Breite von etwa 50 mm aufweist.

16. Leitungsbefestigungsvorrichtung (123), vorzugsweise für eine Installationseinheit (1) nach einem der vorangegangenen Ansprüche, umfassend: zwei Anlageabschnitte (123a, 123b), welche mit einem Leitungsendstück in Anlage bringbar sind, wobei die Leitungsbefestigungsvorrichtung (123), zwischen einer ersten Stellung, in welcher das Leitungsendstück einlegbar ist, und einer zweiten Stellung, in welcher das Leitungsendstück festgelegt ist, überführbar ist, **dadurch gekennzeichnet, dass** der erste Anlageabschnitt (123a) gegenüber dem zweiten Anlageabschnitt (123b) um eine Schwenkachse verschwenkbar ist.

17. Leitungsbefestigungsvorrichtung (123) nach Anspruch 16, **dadurch gekennzeichnet, dass** die Leitungsbefestigungsvorrichtung (123) eine Rastvorrichtung (123f, 123g, 123h) aufweist, womit der schwenkbare Anlageabschnitt (123a) in zumindest einer Schwenkstellung verrastbar ist.

18. Leitungsbefestigungsvorrichtung (123) nach einem der Ansprüche 16 oder 17, **dadurch gekennzeichnet, dass** zumindest einer der Anlageabschnitte (123a) entlang der Schwenkachse bewegbar ist.

19. Leitungsbefestigungsvorrichtung (123) nach Anspruch 18, **dadurch gekennzeichnet, dass** der schwenkbare Anlageabschnitt (123a) entlang der Schwenkachse bewegbar ist.

20. Leitungsbefestigungsvorrichtung (123) nach einem der Ansprüche 16 bis 19, **dadurch gekennzeichnet, dass** die Schwenkachse im Wesentlichen senkrecht zu einer Ebene verläuft, welche eine Achse einer zu befestigenden Leitung einschließt.

21. Installationseinheit (1) nach einem der Ansprüche 1 bis 15 mit zumindest einer Leitungsbefestigungsvorrichtung (123) nach einem der Ansprüche 16 bis 20.

## Geänderte Patentansprüche

### Geänderte Patentansprüche gemäss Regel 86(2) EPÜ.

**1.** Installationseinheit (1) für Kabelkanäle (2), umfassend: ein gegenüber einem Kabelkanal (2) festlegbares Unterteil (11), ein mit dem Unterteil (11) lösbar verbindbares Oberteil (12), **dadurch gekennzeichnet, dass** das Oberteil (12) als vorverdrahtete Mehrfachsteckdose ausgebildet ist, wobei das Unterteil (11) als Zwischengehäuse mit einem Boden (111) und einer sich vom Boden (111) erstreckenden Wand ausgebildet ist und eine Aufnahme (117) für das Oberteil (12) definiert, wobei, wenn das Oberteil (12) in der Aufnahme (117) angeordnet ist, zwischen dem Unterteil (11) und dem Oberteil (12) ein Kabelanschlussraum ausgebildet ist.

**2.** Installationseinheit (1) nach einem der vorangegangenen Ansprüche, **dadurch gekennzeichnet, dass** das Unterteil (11) mindestens einen Eingriffsabschnitt (119) aufweist, der bewegbar ist, um einen Eingriff mit dem Kabelkanal (2) herzustellen bzw. zu lösen.

**3.** Installationseinheit (1) nach einem der vorangegangenen Ansprüche, **dadurch gekennzeichnet, dass** das Oberteil (12) beim Verbinden des Oberteils (12) mit dem Unterteil (11) im Unterteil (12) führbar ist.

**4.** Installationseinheit (1) nach Anspruch 3, **dadurch gekennzeichnet, dass** das Oberteil (12) zumindest einen Führungsvorsprung (125) aufweist.

**5.** Installationseinheit (1) nach Anspruch 3 oder 4, **dadurch gekennzeichnet, dass** das Unterteil (11) zumindest einen Führungsschlitz (115) aufweist.

**6.** Installationseinheit (1) nach einem der Ansprüche 3 bis 5, **dadurch gekennzeichnet, dass**, wenn das Oberteil (12) in der Aufnahme (117) des Unterteils (11) angeordnet ist, der Kabelanschlussraum über den Führungsschlitz (115) zugänglich ist.

**7.** Installationseinheit (1) nach einem der Ansprüche 3 bis 5, **dadurch gekennzeichnet, dass**, wenn das Oberteil (12) in der Aufnahme (117) des Unterteils (11) angeordnet ist, ein Abdeckabschnitt (125b) den Führungsschlitz (125) zumindest abschnittsweise abdeckt, um, vorzugsweise beim Transport oder der Lagerung der Installationseinheit (1), ein Eindringen von Schmutz und/oder Feuchtigkeit in den Kabelanschlussraum zu verhindern.

**8.** Installationseinheit (1) nach Anspruch 7, **dadurch gekennzeichnet, dass** der Abdeckabschnitt (125b) fest mit dem Oberteil (12), über eine Sollbruchstelle (125c) abtrennbar, verbunden ist.

**9.** Installationseinheit (1) nach Anspruch 8, **dadurch gekennzeichnet, dass** der Abdeckabschnitt (125b) einstückig am Oberteil (12) angeordnet ist.

**10.** Installationseinheit (1) nach einem der vorangegangenen Ansprüche, **dadurch gekennzeichnet, dass** das Oberteil (12) und das Unterteil (11) miteinander verrastbar sind.

**11.** Installationseinheit (1) nach Anspruch 10, **dadurch gekennzeichnet, dass** das Oberteil (12) zumindest eine Rastnase (126) aufweist.

**12.** Installationseinheit (1) nach Anspruch 10 oder 11, **dadurch gekennzeichnet, dass** das Unterteil (11) zumindest eine Rastnut (116) aufweist.

**13.** Installationseinheit (1) nach einem der vorangegangenen Ansprüche, **dadurch gekennzeichnet, dass** das Oberteil (12) einen im Wesentlichen blockförmigen Körper mit einer Breite von etwa 40 mm aufweist.

**14.** Installationseinheit (1) nach einem der vorangegangenen Ansprüche, **dadurch gekennzeichnet, dass** das Unterteil (11) einen im Wesentlichen blockförmigen Körper mit einer Breite von etwa 50 mm aufweist.

**15.** Leitungsbefestigungsvorrichtung (123), vorzugsweise für eine Installationseinheit (1) nach einem der vorangegangenen Ansprüche, umfassend: zwei Anlageabschnitte (123a, 123b), welche mit einem Leitungsendstück in Anlage bringbar sind, wobei die Leitungsbefestigungsvorrichtung (123), zwischen einer ersten Stellung, in welcher das Leitungsendstück einlegbar ist, und einer zweiten Stellung, in welcher das Leitungsendstück festgelegt ist, überführbar ist, **dadurch gekennzeichnet, dass** der erste Anlageabschnitt (123a) gegenüber dem zweiten Anlageabschnitt (123b) um eine Schwenkachse verschwenkbar ist.

**16.** Leitungsbefestigungsvorrichtung (123) nach Anspruch 15, **dadurch gekennzeichnet, dass** die Leitungsbefestigungsvorrichtung (123) eine Rastvorrichtung (123f, 123g, 123h) aufweist, womit der schwenkbare Anlageabschnitt (123a) in zumindest einer Schwenkstellung verrastbar ist.

**17.** Leitungsbefestigungsvorrichtung (123) nach einem der Ansprüche 15 oder 16, **dadurch gekennzeichnet, dass** zumindest einer der Anlageabschnitte (123a) entlang der Schwenkachse bewegbar ist.

**18.** Leitungsbefestigungsvorrichtung (123) nach Anspruch 17, **dadurch gekennzeichnet, dass** der schwenkbare Anlageabschnitt (123a) entlang der Schwenkachse bewegbar ist.

**19.** Leitungsbefestigungsvorrichtung (123) nach einem der Ansprüche 15 bis 18, **dadurch gekennzeichnet, dass** die Schwenkachse im Wesentlichen senkrecht zu einer Ebene verläuft, welche eine Achse einer zu befestigenden Leitung einschließt.

**20.** Installationseinheit (1) nach einem der Ansprüche 1 bis 14 mit zumindest einer Leitungsbefestigungsvorrichtung (123) nach einem der Ansprüche 15 bis 19.
